# EUROPEAN PATENT APPLICATION

(11) **EP 2 214 379 A1**
(43) Date of publication of application: **04.08.2010**
(21) Application number: 09250272.3
(22) Date of filing: 03.02.2009
(51) Int. Cl.: H04L 29/08, H04L 12/28

(54) **Network access equipment**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

When a telecommunications connection is established over a packet switched network 4 between a network access point 1 and a network-based service provisioning system 2, the network access point retrieves a geographical identity associated with the physical network termination 3 to which that termination is connected, and stores that identity for use by applications running on computer equipment 15, 16, 17 co-operating with the network access point. This allows location-based services to be provided to the user without input of an address. A particular application provides for a call centre 9 to identify the physical location of a voice call originating from an Internet-protocol telephone 15 or through a femtocell 17.

## Description

This invention relates to communications equipment, and in particular to the provision of location-based services over a data network such as the "Internet".

There are many data services which require a location to be specified. Such services include mapping services, travel advice services, weather information, listings of television broadcast services, and delivery addresses for internet shopping. Some internet telephony services also require location data, for example to distinguish local, long distance (trunk) and international calls, to route calls to information services or customer service centres to a call centre local to the user, or to identify the source of a call to the emergency services.

For some of these services it is possible for a user to specify a location for which he requires information, but it would nevertheless be useful to identify a default location, preferably that of the user himself. In some situations the user may be unable to identify his own location, so provision of an automatic default location would be useful.

Provision of such a default location would be possible if the network termination could store a record of its location. For many applications, such as home hubs or small businesses, the location of the network termination is an adequate surrogate for the user's own location. This is used in the conventional telephone system for some services, such as calls made to the emergency services, as the line from which the call is made is uniquely identifiable with a geographic address. In a cellular network, the user location can be determined by reference to the base transceiver site through which the connection is made.

However, for internet-based services the situation is more complicated, as any requests for data, voice calls, etc, are passed through a network service provider's server equipment and there is no standardised way for the service provider to identify the network termination, as distinct from the user identity, from which the connection has been made. If the user has a mobile terminal, capable of connection to the network at any of a large number of access points, the same user identity may appear in many different places at different times.

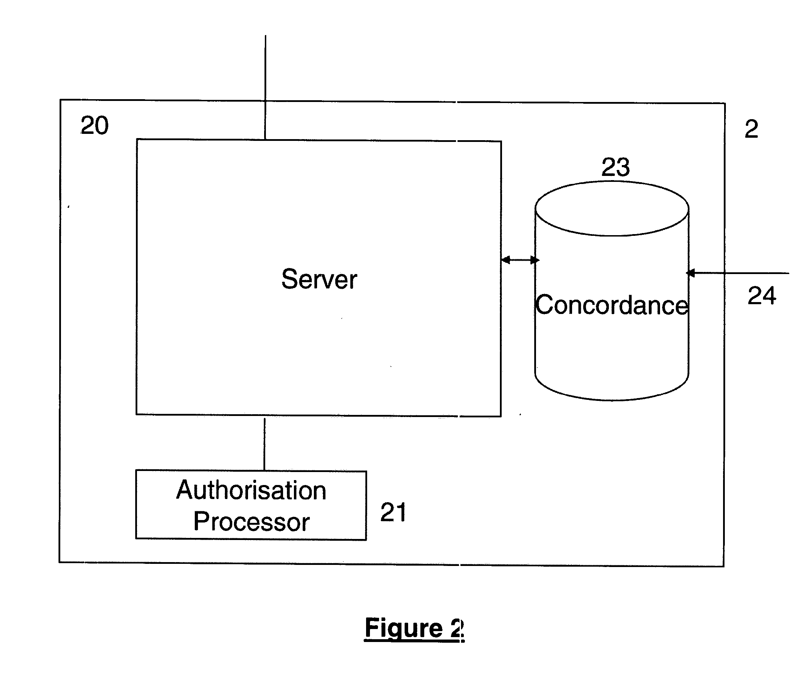

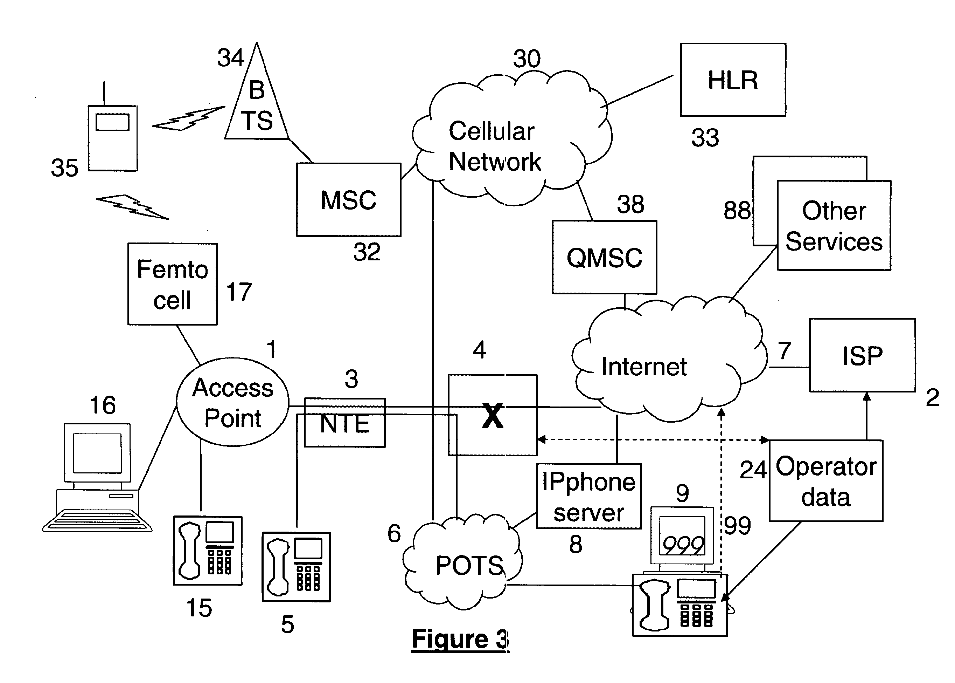

An internet network access point (also known as a "home hub") is a modem connectable to the network, through a fixed network "broadband" connection. An example of such a connection is shown in Figure 3, in which an access point 1 is connected to a user terminal 16 and connected to the Internet 7 through a network termination point 3 (the interface between the customer equipment and the network operator's equipment) and a telecommunications switch 4. The connection to the user terminal 16 may be a physical "wired" connection or a wireless connection. The installation process for such an access point currently requires a user to specify the network termination 3 to which the network access point 1 is connected in order to associate the network "point of presence" (PoP) 22, (Figure 2) with the correct network termination. This is typically achieved by specifying the directory number associated with that line - note that this is the analogue "POTS" (plain old telephone system) number, and is distinct from the directory number of any "internet" phone 16 that may currently be served by the network access point. (The directory number of an internet phone is translated by the network into an IP address so that and incoming calls to that phone are directed via the internet to the PoP).

The applications 8 accessed by the user are unaware of the geographical location to which the data is sent unless the user specifies it in his data request. Even if the telephone number associated with the user's PoP were known, it would be difficult for applications operators to translate a telephone number into a geographical location without a thorough knowledge of the network topology, especially given the increasing portability even of so-called "geographically-based" telephone numbers.

A particular issue arises with the use of femtocells. A femtocell, also known as an "access point base station", is a device which provides the functionality of a base station for cellular telephony using an internet-based connection. Their main purpose is to provide access to the cellular network for cellular handsets at locations where there is poor, or no, reception from the established "macrocells" installed by the network operators. As also shown in Figure 3, connection to the cellular network infrastructure is made from the femtocell 17, through a network access point 1 and the internet 7, to an application server 38 which appears, to the cellular network 30, as a standard mobile switching centre. It is important to note that femtocells can operate quite independently of any macrocell base stations 34 that may be in the vicinity, so the femtocell 17 does not appear on the "neighbour list" of any nearby base stations 34, and has no "neighbour list" of its own. Indeed there may be no macronetwork coverage available at the site. When a handset 35 within range of a macrocell 34 moves into or out of range of a femtocell 17, it is simply recorded in the network operator's location register 33 as having ended contact with one cell 34, accessed through a first switching centre 32, and has become associated with another cell 17 accessed through a second switching centre 38, or vice versa.

Femtocells are embodied as small transportable devices, which may be taken from one location to another as required by their owners to provide coverage wherever they may currently need it. The femtocell cannot therefore itself provide location information to the network unless that information is provided to it. So, for example, in the case of an emergency call via a femtocell-enabled site, the emergency service operator 9 cannot direct help to the site unless the caller is able to identify his location. In contrast, for a call connected through a fixed macrocell 34, the switching centres 32 are configured to provide the emergency service operator with the geographical location of the macrocell 34 from which the call is made, allowing the emergency service operator to identify at least the approximate location of the caller and mobilise the appropriate fire, ambulance or police station to arrange attendance.

Existing internet telephone systems require the user to provide location information by associating the internet telephone 15 with an access point 1 coupled to a particular broadband connection 3 when it is installed. This data is held by the Internet Phone application 8. If the network access point is moved to another location then the information will point to the wrong location.

According to a first aspect of the invention, there is provided a method of establishing a telecommunications connection over a packet switched network between a network access point and a network-based service provisioning system, comprising the steps of connecting the network access point to a termination of a data network, establishing communication with the network-based service provisioning system, identifying the physical network termination to which the network access point is connected, retrieving from a network-based database a geographical identity associated with that termination, and storing that identity for use by applications running on computer equipment co-operating with the network access point.

According to another aspect, there is provided a method for provision of a location-based services to application clients over a packet-switched network, comprising the generation by a client of an initial request for data, transmission of the request to an application server, processing by the server of the request by transmitting a request for location data to the network access point through which the client is connecting to the server, and transmitting previously-stored geographic location data from the network access point to the application server. This data retrieval process is complementary to the data capture process of the first aspect.

According to a third aspect of the invention, there is provided a network-based service provisioning system for communication with one or more network access points over a packet-switched network, comprising a data storage unit for storing a concordance between the network identity of each network termination point and its geographical location, a termination detection unit for detecting the connection of an access point to a termination of the network, and a data retrieval unit for retrieving, from the data storage unit, the geographical location of the termination through which the newly-detected access point is connected and transmitting it to the network access point.

According to a further aspect, complementary to the previously-recited aspect, there is provided a network access point for connection to a telecommunications network termination over a packet switched network, comprising a network interface unit for establishing communication with the network-based service provisioning system, a data retrieval unit for retrieving, from the service provisioning system, a geographical identity, a data store for storing the geographical identity, and a data provision unit for receiving requests for location data from a corresponding network application, retrieving the data from the store, and returning the data to the requesting application.

According to a still further aspect, complementary to the previously-recited aspect, there is provided a network-based application server for provision of a location-based service to an application client, comprising a data request unit for receiving an initial request for data from a client, a location request unit for transmitting a request for location data to the network address through which the client is connecting to the server, and a location processing unit for receiving geographical data in response to the location request and applying the data to the location-based request.

The network-based database may be maintained by a periodic updating process generated by a network inventory processor.

The application server may transmit a confirmation request to the client unit for confirmation or alteration of the geographical data provided in response to the original request, the client unit transmits a response confirming or altering the data to be applied by the application server, and the application server applies the original or altered data accordingly.

The application server may be associated with a telephony call centre system and arranged to identify calls originating from an internet-based line and interrogates the access point associated with the origin of such a call for its location data.

Alternatively, the application client and application server co-operate to provide telephony services over the packet switched network. The application client may be a femtocell unit and the application server may be a complementary quasi mobile switching centre for interconnecting a femtocell with a cellular telephone network.

This invention allows the location information to be associated with the broadband line and not the network access point equipment; so that whenever network access point equipment is connected to a network termination it obtains the relevant location information from the line identity and line installation information. If applications connected to the broadband network through such a network access point require location data, the broadband operator can then obtain information from the network access point relating to the identity of the network termination currently associated with that network access point. This would allow the broadband service provider to provide location information based on the network termination identity stored in the broadband network access point, together with data relating the network topology to geographical location - e.g. grid reference or postcode.

On installation and connection to the network, the network access point preferably updates location information automatically by interrogating a server associated with the ISP network. Should the user transfer the access point equipment from one network connection to another, the interrogation process will be repeated on re-connection, thus updating the location. Should the customer premises equipment be disconnected from the network, it preferably re-initiates the process when it is re-connected. This ensures that correct location information is held in the CPE wherever it is installed, as it may have been transferred from one line termination to another. Alternatively, if a device is moved from its original location, it may be disabled until re-enabled by a service engineer after authentication that the new location is legitimate. The device may re-enable itself if it is returned to the original broadband line.

The location storage function could be made a standard requirement for broadband service network access points, so that a common method of emergency service location access can be defined for any internet-based telephony calls, including those made from femtocells..

The information held could be the geographic telephone number of the service associated with the broadband line or indeed the broadband identifiers. It could instead be the full postal address of the broadband terminating site, or a map grid reference such as those provided by the United Kingdom's Ordnance Survey, the French IGN (Institut Geographique National) or the United States MGRS, or the latitude and longitude of the location. Alternatively, it could be an encrypted code that a centralised database can extract and use to recover information from a central database containing site location addresses

The process by which the access point equipment determines its location can make use of the fact that, for a fixed network, the network operator has data available for the geographical location of each network termination. As previously discussed, this may be by reference to some geographical identifier such as grid reference, but is typically defined by the postal address, since it is necessary for the network operator to know this for maintenance and billing purposes. This information is held on at least one of the service provider systems, as is also the location of the last serving piece of line plant, i.e. cabinet or distribution pole for every physical piece of copper cable, and the equivalent for the end point of fibre optic circuits.

This information provides the basis for the co-ordination of the delivery of a broadband circuit with the delivery information from a customer, and co-ordination of end point records with that of the line plant records. There are thus several sets of information that can be used to ascertain the accuracy of the terminating point location recorded for a given circuit. By comparing these pieces of information, the service provider can provide with a high level of certainty the location of the broadband service line.

In the embodiment, a system is implemented in the network to detect the connection of an end user network access point/ADSL modem combination to a line, retrieves a location reference for that line and downloads that location reference to the access terminal. This reference may be a complete postal address, a grid reference, or defined by some other standard reference agreed between operators and equipment suppliers. Equipment suppliers would be required to provide a memory location and standardised means of writing and reading it remotely.

A call centre operator, for example for the emergency services, would be provided with a system that can interrogate the broadband terminating network access point when a call from an internet-based line is received. The system would also interrogate the broadband network access point associated with any mobile call, (identified by mobile number calling ID) for which no cell identity is provided. This will allow the location storage area in the network access point to be accessed and the information to be retrieved and used to direct emergency services to the calling location.

Alternatively, the internet telephony platform or femtocell qMSC can be arranged to store the data in a form compatible with the fixed line data or cellular location data already maintained for more conventional systems. This allows the call centre equipment to be conventional, but requires alteration of the location data stores to accommodate the additional, and more changeable, location data.

An embodiment of the invention will now be described with reference to the drawings, in which
Figure 1 is a schematic illustration of network access point equipment operating according to the invention
Figure 2 is a schematic illustration of an internet service provisioning system operating according to the invention
Figure 3 is a schematic illustration of a communications network illustrating the context in which the invention operates
Figure 4 is a flow diagram illustrating the process by which location information is loaded into the network access point
Figure 5 is a flow diagram illustrating the process by which location information is retrieved from the network access point.

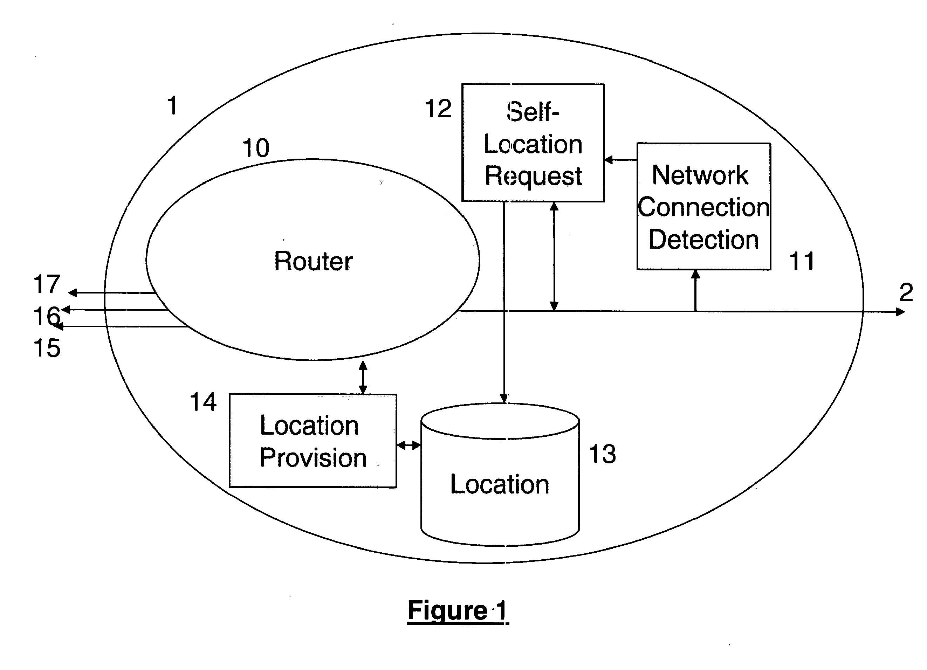

It should be noted that many of the functional elements depicted in the Figures, and in particular in Figures 1 and 2, may be embodied as software running on a programmable device.

Figure 1 is a schematic illustration of network access point equipment 1 operable according to the invention. The equipment has a router 10 which allows data to be directed between a connection to a network termination 3 and a number of user connections 15, 16, 17. These user connections may be wireless or by a fixed line such as an Ethernet or USB connection. As depicted in Figure 2, the user connections may be connected to an internet-enabled voice connection 15, a computer 16 and a femtocell 17, but this is only illustrative and other internet-compatible devices may also be connected.

In addition to these conventional features, the access point equipment 1 has a connection detection system 11 which is responsive to connection and disconnection of the device from the network termination 3. This detection system controls a location request "client" 12 which co-operates with a location providing "server" 20 provided by the service provisioning system to be described with reference to Figure 2 to obtain a location identifier, for storage in a memory 13 provided for the purpose. The router also co-operates with a location provision function 14 which is responsive to data requests delivered to it, by the router 10, to retrieve the information stored in the memory 13.

Figure 2 is a schematic illustration of an internet service provisioning (ISP) system 2 operating according to the invention. The provisioning system is the point of contact with the user's service provider. It comprises a server 20 which handles traffic over the Internet to and from the individual users. One of the functions of the provisioning systems is an authorisation processor 21 which vaiidates the user's access details when connection is made to the network so that the current network address can be identified as relating to an authorised user. The ISP 2 also provides a "point of presence" (PoP) which acts as a surrogate for the user as seen by other services 8, 9, 38, 88, so that data can be routed thereto. It is this concept of a surrogate point-of-presence which allows individual users to receive data over the Internet, but as the point-of-presence may be some distance from the user access point it makes it difficult for such other services to identify the user's true location.

According to the invention a further item of data is provided by the service provider 2. This is a concordance 23 between each network address and a geographical location identified with that address.

The concordance 23 is maintained by periodic updates from the operator of the physical network (indicated by the arrow 24). Information recording the geographical location of each network termination 3 is already available to operators, for example to direct maintenance staff to the correct geographical location when a connection needs attention, for example to investigate a reported fault, or to identify which lines are available when a new installation is to be made at a specified address. Geographical information relating to network termination location is also already routinely provided to the operators of emergency services so that the appropriate service can be despatched to the assistance of the caller even if the caller is unable to provide any coherent address. This is a relatively simple matter when the call is provided through a circuit-switched system 5, as a direct connection is provided between the caller and called party throughout the call. In a packet-switched connection 7 this is not so straightforward, as no consistent end-to-end connection is provided - different packets may take different routes through the system, making it harder to trace the source of the call.

Figure 3 is a schematic illustration of a communications network illustrating the context in which the invention operates. In practice there would be several access points served from each service provisioning system, but for simplicity only one access point 1 and one service provisioning system 2 are depicted. The access point 1 is connected through a network termination point 3 and a network switch 4 giving access to the internet 7, through which access is available to the service provisioning system 2, and to various internet-based services 8, 9, 38, 88.

The switch 4 also provides a connection to the conventional circuit switched system 6, allowing a conventional telephone connection 5 - 6 to be provided.

Among the internet-based services 88 available is an internet telephone service 8, allowing connection between an internet-enabled handset 15 and other parties connectable through the traditional telephone system 5, similarly to the interconnections between the cellular network 30 and the traditional network 5. Other services 88 accessible through the internet include home shopping services and mapping services, some of which may require location-based information from the user.

A further service available through the internet is access to a cellular network through a "quasi-MSC" (mobile switching centre) 38, which allows a femtocell 17 connected to an access point 1 to act as a base station for cellular telephony. Essentially the femtocell 17 appears to a mobile handset 35 as a conventional base transceiver site 34, whilst the Quasi-MSC 38 appears to the cellular network 30 as a conventional MSC 32. As the handset 35 moves in and out of range of the femtocell 17 and BTS 34, the switching centres 38, 32 report these changes to a home location register 33 associated with the network to allow incoming calls to the handset 35 to be routed appropriately for the current location of the handset 35.

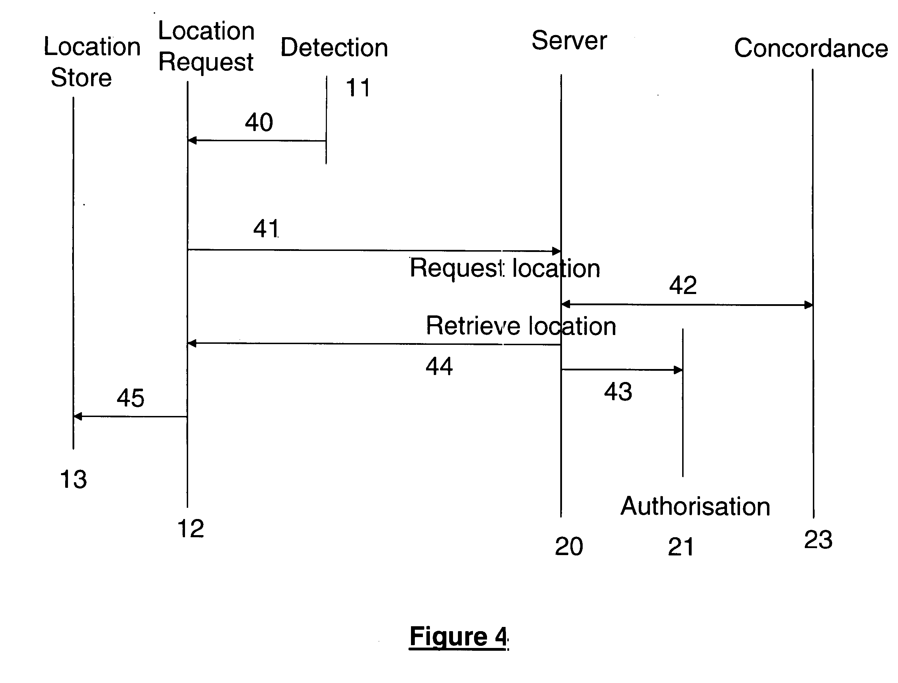

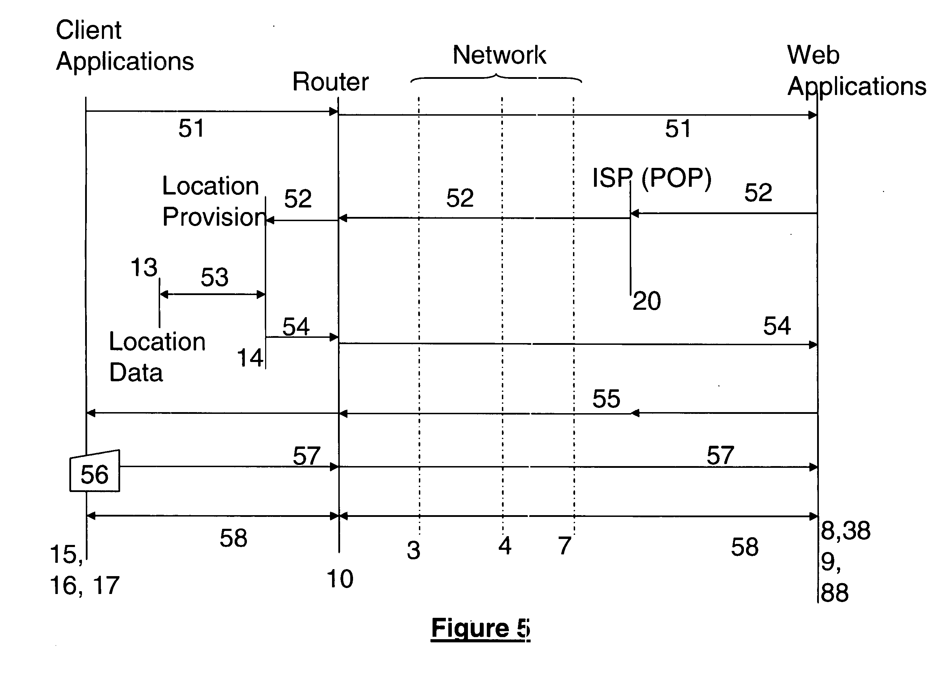

The mode of operation of this embodiment will now be described with reference to Figure 4, which illustrates the data capture process, and Figure 5 which illustrates the data retrieval process.

Referring to Figure 4, when the connection detection system 11 detects that the access point equipment 1 has been newly connected to a network 4 it indicates this fact to the location request system 12 (step 40). The location request system 12 then transmits a request to the user's internet service provider 2 (step 41) for a location identifier.

The service provider's server 2, on receiving such a request 41, identifies the network address from which the request is received. This is possible because at the interface between the packet switched network 7 and the customer line 3, the exchange 4 can identify the physical access point 3 through which the access point is connected. This information is conventionally used to identify whether the equipment is permitted to be connected to that termination, but is here used to interrogate the concordance store 23 in order to retrieve a geographic identity (step 42).

At the same time, authorisation checks are carried out (step 43) to ensure that the access point is authorised to connect to the network.

The geographic identity is returned to the location request client 12 in the requesting access point 1 (step 44), which passes the identity to the location store 13 (step 45) for subsequent retrieval as required, and as will now be described with reference to Figure 5.

When a client application on a user terminal e.g. 16 transmits a request 51 for data, the router 10 forwards the request by way of the access network 3, 4 and the internet 7 to the appropriate web-based application 88. Similarly, if the request is from an internet-based phone handset 15 the request is forwarded to a web-based voice services platform 8.

Some applications require location data in order to provide an answer to a user's request. Such applications include mapping and route finding services such as "Multimap"™, travel advice services such as "The Train Line", home delivery services such as "Amazon"™, weather information, and listings of television broadcast services. For internet telephony applications 8, location data can be useful to call-handling systems 9 to identify the geographical location of the caller and allow routing of the call to a call centre handler 9 with local knowledge.

There are some circumstances in which the user is not aware of his location, and many others where it would be convenient to provide a default location. There are also some services whose availability is subject to territorial restrictions, for example because of censorship laws, franchise restrictions (for instance in streaming services such as the BBC's "iPlayer"), or regulatory restrictions (for example in share dealing), and such restrictions could be circumvented if the location information were to be suppiied by a user's own input.

In the present invention, if the web application 8, 9, 38, 88 requires location data from the user it returns a request 52 to the originating internet address, which is received at the internet service provider 20 acting as the user's "point of presence" and forwarded to the router 10 in the user's access point equipment.

This request is to be fulfilled not by the user providing a manual entry, as is conventional, but by reference to data stored in the user's access point equipment 1. The request 52 is therefore addressed not to the network address of the requesting terminal 16, but to a separate location provision function 14 accessible from the router 10. The router 10 thus forwards the request (52) to the location provision function 14 which retrieves the location data currently stored in the location register 13 (step 53).

The location data is then delivered to the application 8, 9, 38, 88 by way of the router 10, and network 3, 4, 7 (step 54).

It is envisaged that the location data be held in the concordance store 23 in a standardised form recognisable by any application 8, 9, 38, 88 requiring the data. The location data may be translated by the application 8, 9, 38, 88 into some other format more appropriate for the individual application, e.g. map reference, post code data, or a more general (less specific) format such as country or time zone.

For some applications a default location retrieved in this way may be overridden, for example if a user requires a delivery address, weather information or travel directions based on a location other than his current position. This can be achieved by sending a separate request 55, this time addressed to the user terminal 16 rather than the location provision system 14, for an over-ride location. This, in the form of a user input 56, can be returned to the application 8 (step 57).

The user terminal 15, 16 and web application 8, 9, 38, 88 can then co-operate (58) to provide the required location-based service.

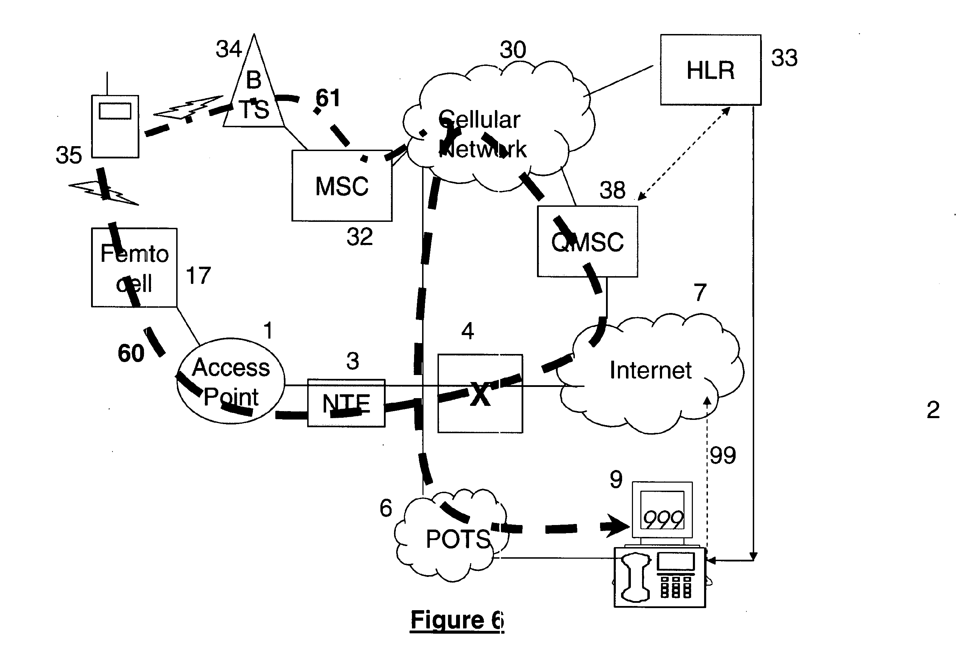

Figure 6 shows the information flows performed when a telephone call is made from a mobile telephone connected to a femtocell, and when it is connected to an ordinary base transceiver station. All the elements depicted in Figure 6 are also to be found in Figure 3, but certain elements not relevant to the following discussion have been omitted from Figure 6.

As already discussed, the home location register (HLR) maintains a record of the base transceiver site 34 or other connection 17 to which a handset 35 is currently working. This is primarily to allow calls to be routed to the handset 35. However, the information is also available to the emergency services 9 in order to allow calls to be traced and assistance directed to the location from which the call is made. This is analogous to the supply of network data 24 to the services depicted in Figure 3, but changes take place on a much more rapid timescale.

When a normal call is made from a cellular telephone 35, as shown by the curve 61, the call is routed by way of a base transceiver station 34 and a mobile switching station (MSC) 32 to the cellular network 30, from where the call may be directed by the conventional telephone network 6 to a called party 9. Operators such as the emergency services which have access to the location data in the HLR 33 can use it to trace the location from which the call was made.

However, when a call is made through a femtocell 17 (curve 60) the call is routed to a quasi mobile switching centre 38 by way of a network access point 1, switch 4 and the internet 7. The quasi-MSC 38 appears to the network 30, and the HLR 33, as a normal MSC 32, and the call is routed through the network 30, 6 to the called party 9 in the same way. However, although the HLR 33 can provide the network identity of the femtocell 17 to the called party 9 exactly as it would for a fixed BTS, the HLR 33 cannot identify its geographical location because the femtocell 17, unlike the BTS 34, is a portable device and can be connected to any access point 1, which can in turn be connected to any network termination 3.

This may be resolved in either of two possible ways. The call centre 9 may itself be configured as a network application server, operating in a similar manner to the servers 8, 88 already discussed. A call centre operator, for example for the emergency services, would be provided with a system that can connect through the Internet 7 (as indicated by dotted line 99 in Figures 3 and 6) to interrogate the broadband terminating network access point 1 when a call from an internet-based line is received. The system would also interrogate the broadband network access point associated with any mobile call, (identified by mobile number calling ID) for which no cell identity is provided in the HLR 33. This will allow the location storage area in the network access point to be accessed and the information to be retrieved and used to direct emergency services to the calling location.

Alternatively, when the QMSC 38 detects a femtocell 17 establishing a connection over the internet 7, they co-operate in the manner previously described with reference to Figure 5 for other server (8, 88) / client (15, 16) connections so that the QMSC 38 can retrieve the location data 13 which can identify the location of the access point to which the femtocell 17 is connected. This information may be retrieved directly from the QMSC 38 by the call centre 9, when a call is connected through the femtocell 17, or it may be forwarded to the HLR 33 and stored there, as with the more permanent location data for the fixed base stations 34, for subsequent retrieval by the call centre 9 as required.

## Claims

1. A method of establishing a telecommunications connection over a packet switched network between a network access point and a network-based service provisioning system, comprising the steps of connecting the network access point to a termination of a data network, establishing communication with the network-based service provisioning system, identifying the physical network termination to which the network access point is connected, retrieving from a network-based database a geographical identity associated with that termination, and storing that identity for use by applications running on computer equipment co-operating with the network access point.

2. A method according to claim 1, wherein the network-based database is maintained by a periodic updating process generated by a network inventory processor.

3. A method for provision of a location-based services to application clients over a packet-switched network, comprising the generation by a client of an initial request for data, transmission of the request to an application server, processing by the server of the request by transmitting a request for location data to the network access point through which the client is connecting to the server, and transmitting previously-stored geographic location data from the network access point to the application server.

4. A method according to claim 3, wherein the application server transmits a confirmation request to the client unit for confirmation or alteration of the geographical data provided in response to the original request, the client unit transmits a response confirming or altering the data to be applied by the application server, and the application server applies the original or altered data accordingly.

5. A method according to claim 3, wherein the application server is associated with a telephony call centre system and identifies calls originating from an internet-based line and interrogates the access point associated with the origin of such a call for its location data.

6. A method according to claim 3, wherein the application client and application server co-operate to provide telephony services over the packet switched network.

7. A method according to claim 6 wherein the application client is a femtocell unit and the application server is a quasi mobile switching centre for interconnecting a femtocell with a cellular telephone network.

8. A network-based service provisioning system for communication with one or more network access points over a packet-switched network, comprising a data storage unit for storing a concordance between the network identity of each network termination point and its geographical location, a termination detection unit for detecting the connection of an access point to a termination of the network, and a data retrieval unit for retrieving, from the data storage unit, the geographical location of the termination through which the newly-detected access point is connected and transmitting it to the network access point.

9. A network-based service provisioning system according to claim 8, comprising an interface with a network inventory processor by means of which the network data in the data storage unit may be updated.

10. A network access point for connection to a telecommunications network termination over a packet switched network, comprising a network interface unit for establishing communication with the network-based service provisioning system, a data retrieval unit for retrieving, from the service provisioning system, a geographical identity, a data store for storing the geographical identity, and a data provision unit for receiving requests for location data from a corresponding network application, retrieving the data from the store, and returning the data to the requesting application.

11. A network-based application server for provision of a location-based service to an application client, comprising a data request unit for receiving an initial request for data from a client, a location request unit for transmitting a request for location data to the network address through which the client is connecting to the server, and a location processing unit for receiving geographical data in response to the location request and applying the data to the location-based request.

12. A network-based application server according to claim 11, wherein the location processing unit has a confirmation unit for transmitting a request to the client unit for confirmation or alteration of the geographical data provided in response to the original request, and for using or altering the data to be applied to the request according to a response received from the client unit.

13. A network based application server according to claim 11, being associated with a telephony call centre system and having a call screening system to identify calls originating from an internet-based line, and activating the data request unit to interrogate the access point associated with the origin of such a call for its location data.

14. A network based application server according to claim 11, being an application platform for the provision of telephony services over the packet switched network.

15. A network-based application server according to claim 14, being a quasi-mobile switching centre for interconnecting a femtocell with a cellular telephone network.
